# EUROPEAN PATENT APPLICATION

(11) **EP 2 381 369 A1**
(43) Date of publication of application: **26.10.2011**
(21) Application number: 10160515.2
(22) Date of filing: 20.04.2010
(51) Int. Cl.: G06F 17/27, G06F 3/048

(54) **Method and apparatus for selective suspension of error correction routine during text input**

(71) Applicant: RESEARCH IN MOTION LIMITED, Waterloo, Ontario N2L 3W8 (CA)
(72) Inventor: Elizarov, Michael, Waterloo Ontario N2L 5Z5 (CA); Nguyen, Dai, Van, Duc, Waterloo Ontario N2L 5Z5 (CA)
(74) Representative: MERH-IP Matias Erny Reichl Hoffmann

(57) **Abstract**

An improved portable electronic device includes a touch-sensitive display and a text input routine that employs an error correction routine. The error correction routine evaluates inputs to determine whether they are ambiguous based upon the actual location of the input and with the use of a linguistic database. The error correction routine is suspended for a single input immediately following a deletion input, after which the error correction routine is automatically reactivated. In the example embodiment described herein, the error correction routine is suspended for a single input by ignoring the output of the error correction routine, after which the output of the error correction routine is not ignored for subsequent inputs.

## Description

### Field of Technology

The instant disclosure relates to portable electronic devices, including but not limited to, portable electronic devices having touch screen displays and their control.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld portable devices, which are small and have limited space for user input and output. The information displayed on the touch-sensitive displays may be modified depending on the functions and operations being performed. With continued demand for decreased size of portable electronic devices, touch-sensitive displays continue to decrease in size.

Such devices have not, however, been without limitation. Some users have experienced difficulty inputting text and other inputs on touch-sensitive displays that are of decreased size, and to facilitate the correct inputting of text, error correction routines have been developed. However, known error correction routines can become difficult to use because input systems that employ error correction routines often have the effect of responding to a user input by outputting what the system believes the user to have intended to input instead what was actually input. It thus would be desirable to provide an improved portable electronic device and error correction routine that provide enhanced performance.

### Brief Description of the Drawings

A full understanding of the disclosed and claimed concept can be gained from the following Detailed Description when read in conjunction with the accompanying drawings in which:

Fig. 1 is a block diagram of a portable electronic device in accordance with the disclosure;

Fig. 2 is a front elevational view of an embodiment of the portable electronic device of Fig. 1 with a first output on a touch-sensitive display thereof;

Fig. 3 is a depiction of another output that can be provided on the touch-sensitive display of the portable electronic device of Fig. 2;

Fig. 4 is a depiction of another output that can be provided on the touch-sensitive display of the portable electronic device of Fig. 2;

Fig. 5 is a depiction of another output that can be provided on the touch-sensitive display of the portable electronic device of Fig. 2;

Fig. 6 is a depiction of another output that can be provided on the touch-sensitive display of the portable electronic device of Fig. 2;

Fig. 7 is a depiction of another output that can be provided on the touch-sensitive display of the portable electronic device of Fig. 2; and

Fig. 8 is a flowchart depicting certain aspects of an improved method in accordance with the disclosure.

### Detailed Description

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device.

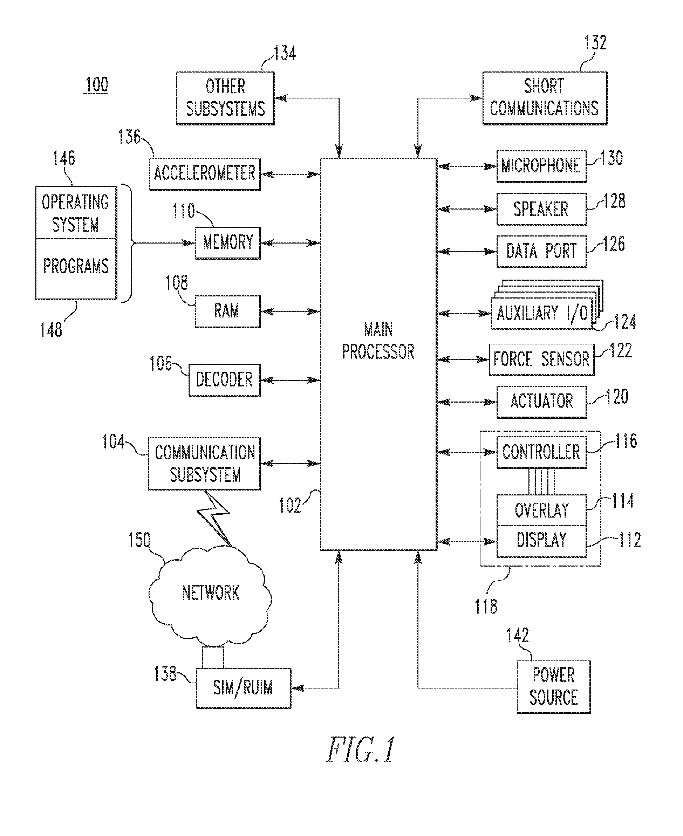

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface (GUI) is performed through the touch-sensitive overlay 114 which serves as an input component of the touch-sensitive display 118. The processor 102 interacts with the touch-sensitive overlay 114 via the electronic controller 116. Information, such as text, characters, symbols, images, icons, and other items that may be displayed or rendered on a portable electronic device, is displayed on the display 112 of the the touch-sensitive display 118 via the processor 102. The display 112 thus serves as an output component of the touch-sensitive display 118. The processor 102 may interact with an accelerometer 136 that may be utilized to detect direction of gravitational forces and accelerations or gravity-induced reaction forces and accelerations.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes one or more routines in the form of an operating system 146 and software applications, programs, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. If the touch is a moving touch, such as a sliding touch, speed and direction of the touch may be additional attributes which are determined. Touch location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

The actuator(s) 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 may result in provision of tactile feedback.

A mechanical dome switch actuator may be utilized. In this example, tactile feedback is provided when the dome collapses due to imparted force and when the dome returns to the rest position after release of the switch.

Alternatively, the actuator 120 may comprise one or more piezoelectric (piezo) devices that provide tactile feedback for the touch-sensitive display 118. Contraction of the piezo actuator(s) applies a spring-like force, for example, opposing a force externally applied to the touch-sensitive display 118. Each piezo actuator includes a piezoelectric device, such as a piezoelectric (PZT) ceramic disk adhered to a metal substrate. The metal substrate bends when the PZT disk contracts due to build up of charge at the PZT disk or in response to a force, such as an external force applied to the touch-sensitive display 118. The charge may be adjusted by varying the applied voltage or current, thereby controlling the force applied by the piezo disks. The charge on the piezo actuator may be removed by a controlled discharge current that causes the PZT disk to expand, releasing the force thereby decreasing the force applied by the piezo disks. The charge may advantageously be removed over a relatively short period of time to provide tactile feedback to the user. Absent an external force and absent a charge on the piezo disk, the piezo disk may be slightly bent due to a mechanical preload.

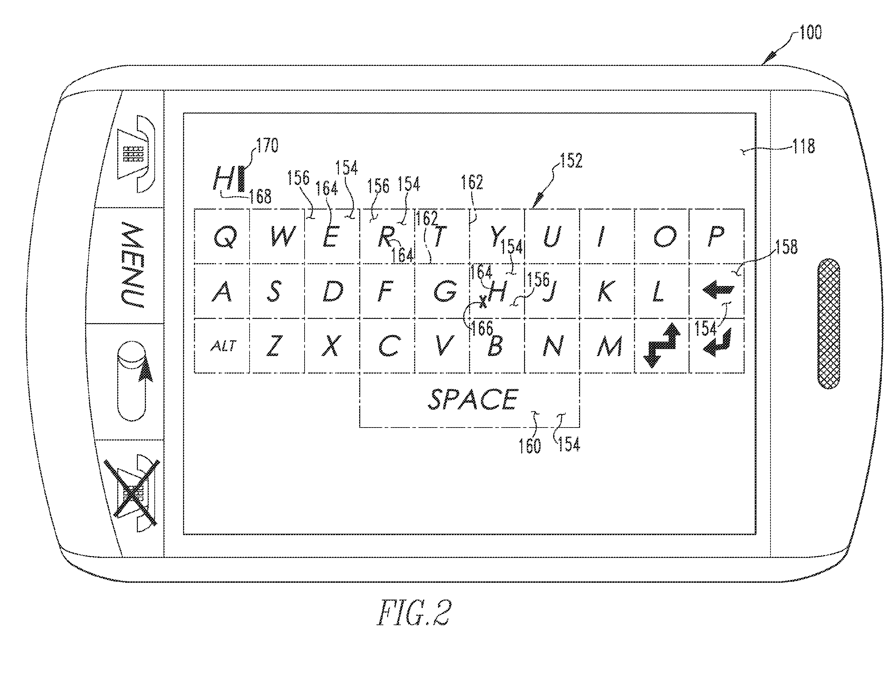

An example embodiment of the portable electronic device 100 is depicted generally in Fig. 2 which also depicts a keypad 152 that is output on the touch-sensitive display 118. The keypad 152 can be employed for alphanumeric input such as text input into the portable electronic device 100 and includes a plurality of input elements 154. The input elements 154 comprise a plurality of alphanumeric input elements 156 that each have at least a first character 164 assigned thereto, and further comprise a number of functional input elements 154 such as a <BACKSPACE> 158 and a <SPACE> 160. While the input elements 154 can be referred to as being "keys" or "virtual keys" by way of example, it is understood that each input element 154 is a particular region of the overlay 114 as indicated by a number of various boundaries 162 depicted generally in Fig. 2. It is also understood that the boundaries 162 themselves as depicted in Fig. 2 and elsewhere herein may or may not actually be output on the touch-sensitive display 118, and it is noted that such boundaries 162 are depicted herein for purposes of illustrating the bounds of the active zones to which are assigned the various characters 164 such as alphabetic characters or numeric characters, which can be collectively referred to as alphanumeric characters.

Among the routines that are executable on the processor 102 are a text input routine and an error correction routine that are employed during alphanumeric entry with the keypad 152. While the error correction routine can be in any of a variety of forms, the example error correction routine employed in the instant disclosure is one which evaluates the actual location of each input on the keypad 152 and determines whether the input should be considered to be ambiguous based upon factors such as proximity of the input to one or more of the boundaries 162, the degree to which characters 164 assigned to adjacent alphanumeric input elements 156 are textually ambiguous based upon a linguistic database that is accessed by the error correction routine, and other factors.

For instance, an input that is at a location precisely on a boundary 162 between two adjacent alphanumeric input elements 156 will almost certainly be considered to be an ambiguous input by the error correction routine, and the ambiguity will be resolved based upon the characters 164 that are assigned to such adjacent alphanumeric input elements 156 and the linguistic database that is accessed by the error correction routine. By way of further example, an input that occurs within the boundary 162 of an alphanumeric input element 156 but that is close the boundary 162 of an adjacent alphanumeric input element 156 potentially will be considered to be ambiguous based upon the proximity of the input to the boundaries 162 and the potential linguistic ambiguity between the characters 164 assigned to the adjacent alphanumeric input elements 156, as well as other factors. Alternatively, such an input may not be considered to be ambiguous if the characters 164 are not very ambiguous, such as if one character 164 would result in a highly likely textual interpretation whereas the other character 164 would result in a character combination that is nonexistent in the linguistic database. The aforementioned examples are not intended to be limiting and rather are intended to illustrate the various fashions in which various error correction routines can be implemented within the disclosed embodiment.

In one embodiment of the disclosed concept, all inputs are provided to the error correction routine for possible correction based upon various criteria. The error correction routine returns an output that may be in form of a preferred character which may or may not be the same as the actual character 164 assigned to the alphanumeric input element 156 where the input occurred. Based upon the location of the input and the content of the linguistic database, and possibly other factors, the error correction routine informs the text input routine whether the actual location of the input, which would be a character 164 assigned to an alphanumeric input element 156, should be overridden by a different character 164. In situations where the preferred character 164 is the actual character 164 that was input, the preferred character and the actual character are the same. In situations where the preferred character 164 is a character 164 of an alphanumeric input element 156 adjacent to the alphanumeric input element 156 where the input actually occurred, the preferred character 164 and the actual character 164 are different.

Advantageously, however, the disclosed embodiment of the portable electronic device 100 suspends the error correction routine for the input that immediately follows a deletion input such as an actuation of the <BACKSPACE> 158. In the event of such a deletion of an input, any output from the error correction routine is ignored with respect to a single further input, and the character 164 that is assigned to the alphanumeric input element 156 where the input actually occurred is therefore provided as an output. In such a situation, any ambiguity that had been detected with regard to any previous, i.e., non-deleted, inputs in the same word are thereafter ignored, and the non-deleted characters are therefore locked and unchangeable unless they are themselves deleted.

An example of such an input operation is provided generally in Figs. 2-7. In Fig. 2, an actual location of an input is generally indicated at the numeral 166 as being within the boundary 162 of the alphanumeric input element 156 to which is assigned the character "H" 164. The example input location 166 is well within the boundaries 162 and thus the character 164 that is preferred by the error correction routine is the character "H", which is the same as the actual character 164 that is assigned to the alphanumeric input element 156 where the input at 166 occurred. As such, the output of the letter "H" 168 is provided on the touch-sensitive display 118. A cursor 170 is depicted adjacent the letter "H" 168 that has been output on the touch-sensitive display 118 as an indication of the location where further textual inputs will be received.

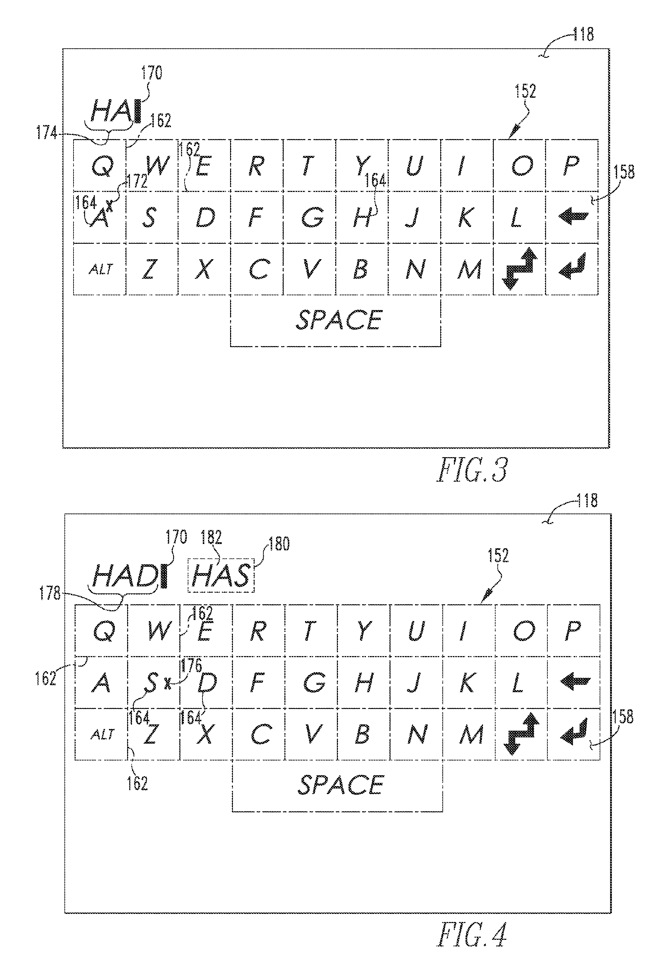

In a similar fashion, Fig. 3 depicts another input at a location indicated at the numeral 172 which is well within the boundaries 162 of the alphanumeric input element 156 to which is assigned the character 164 "A". As such, the output of the letters "HA" 174 is provided on the touch-sensitive display 118 by the text input routine.

Fig. 4 depicts another input at a location indicated at the numeral 176 which is within the boundaries 162 of the alphanumeric element 156 to which the character 164 "S" is assigned, but the input location 176 is close to the boundary 162 of the adjacent alphanumeric input element 156 to which is assigned the character 164 "D". As such, the error correction routine concludes that the input 176 is ambiguous between the two characters 164 "S" and "D". In the example of Fig. 4, the error correction routine has provided as a preferred character the letter "D", and thus the text input routine provides the output of the letters "HAD" 178 as being the preferred output, with "D" being the preferred character of the most recent input. However, due to the detected ambiguity of the most recent input, a variant window 180 is additionally provided that includes an alternative output of the letters "HAS" 182 which comprises the letter "S" as an alternate character. It is noted that in Fig. 4 the letter "S" is the actual character 164 of the input 176 but is not the preferred character, it being reiterated that the error correction routine has caused the outputting of the letter "D" as the preferred character whereas the letter "S" is an alternate character.

It is further noted that the aforementioned preferred character "D" is considered to be "preferred" in the particular set of circumstances described above based at least in part upon the fact that the word "HAD" is the word that is preferred over the alternative word "HAS". That is, the letter "D" is not *per se* preferred over the letter "S", but rather the word "HAD" is preferred over the word "HAS" according to the linguistic database with this particular sequence of inputs. Since the word "HAD" is preferred in the particular set of circumstances described above, the letter "D" is a preferred character for outputting in response to the current input.

It is also noted that the content of the linguistic database can be employed in numerous fashions in determining the character that will be preferred in response to any particular input. For instance, one possible interpretation of a string of inputs might correspond with a prefix of a given word in the linguistic database, whereas another interpretation of the same string of inputs might correspond with a prefix of another word in the linguistic database or might correspond with a complete word in the linguistic database or both. In such a circumstance, the system might discount by a certain percentage a frequency of a word when the input sequence is only a prefix of the word rather than the entire word. Similarly, the system might average in one fashion or another the frequencies of the words for which an input corresponds completely or is just a prefix in order to provide a composite frequency for a given character string. In any event, however, it is reiterated that the character interpretation of any given input within a string of inputs is based upon the words in the linguistic database to which the string of inputs correspond in whole or in part.

If the user had actually intended to type "D" with the input 176, the user can merely continue typing and thus passively accept the interpretation of "D" for the third input in the current word. However, if the user had desired a character other than "D", the user can provide a deletion input such as by actuating the <BACKSPACE> 158 that will delete the most recent character which, in the example of Fig. 4, is the letter "D". Advantageously, the text input routine will additionally set a flag that will cause the immediately next input that is within the boundary 162 of an alphanumeric input element 156 to be interpreted as an input of whatever character 164 is assigned to the actual location of the input.

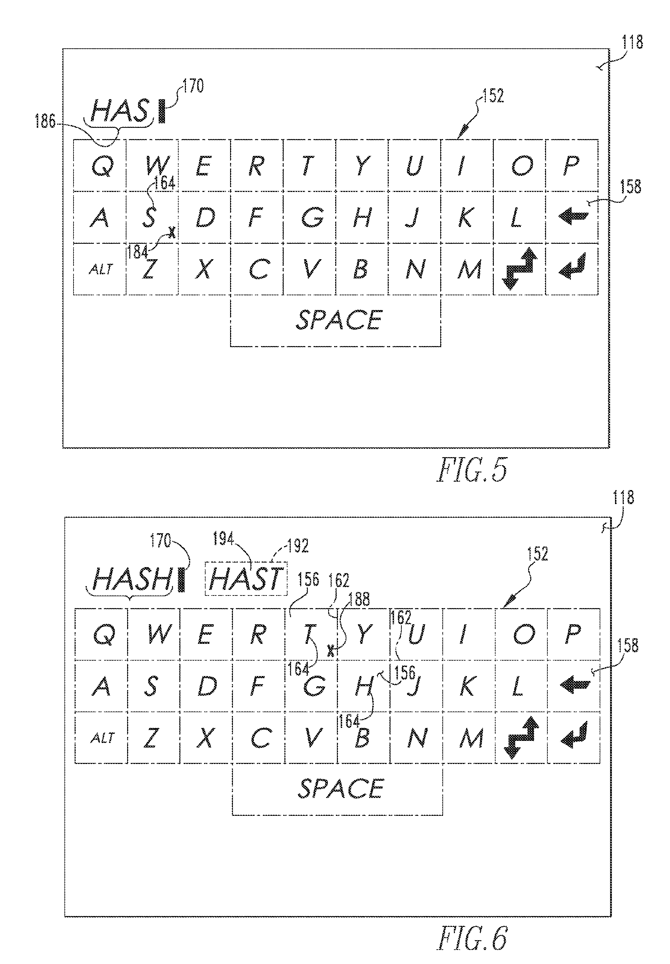

As such, if between Fig. 4 and Fig. 5 the user actuated the <BACKSPACE> 158 and then provided the input as indicated in Fig. 5 at the location represented by the numeral 184, the output will be the letters "HAS" 186, which includes the actual character 164 assigned to the alphanumeric input element 156 that was the subject of the input at 184. It can be seen from Fig. 5 that the input location 184 is very close to the boundaries 162 of three adjacent alphanumeric input elements 156, but regardless of such proximity the text input routine ignores any output from the error correction routine as to this current input at 184 and interprets the input at 184 as being an input of the letter "S".

Further advantageously, however, subsequent to such an actuation of an alphanumeric input element 156 that was immediately after a deletion input, such as with the input 184, the flag is cleared and further outputs from the error correction routine are again employed in interpreting future inputs. For instance, and as is indicated in Fig. 6, a further input at the location represented by the numeral 188 within the alphanumeric input element 156 to which the character 164 "T" is assigned is determined by the error correction routine to be ambiguous with the character 164 "H" of a diagonally adjacent alphanumeric input element 156. The error correction routine thus provides as the output the string of letters "HASH" 190 which includes the terminal character "H" as the preferred character that was output from the error correction routine. Fig. 6 additionally depicts another variant window 192 which includes the output of the letters "HAST", with the letter "T" being an alternate character albeit also being the actual character 164 that corresponded with the input at 188. In this regard, the output "HAST" is a prefix of the complete word "HASTE", which can be found in the linguistic database. It thus can be seen that the output of the error correction routine is no longer ignored and thus is operative for inputs occurring subsequent to any input which occurred after the input at 184 without an intervening deletion input.

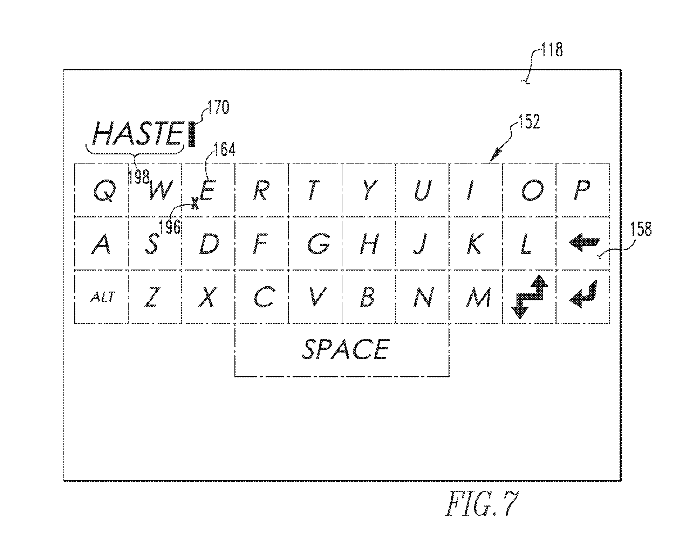

In Fig. 7, the user has continued to type by providing the input as indicated at the numeral 196 without providing any intermediate inputs after the input depicted in Fig. 6. That is, following the output at Fig. 6, the immediately next input is that depicted in Fig. 7, which results in the output of the letters "HASTE" 198. In this regard, it can be seen that the input at the location 196 is well within the boundaries 162 of the alphanumeric input element 156 to which the character 164 "E" is assigned. The text input routine thus has determined that based upon the current input at 196, the earlier input at 188 actually should have been "T" rather than what had been the preferred character "H" in Fig. 6. That is, the text input routine and the error correction routine working in conjunction with the linguistic database have the ability to alter, based upon subsequent keystrokes, characters that previously had been determined to be ambiguous. This is based at least in part upon the contents of the linguistic database which would have indicated that "HASHE" is not a valid word. It is noted, however, that the initial letters "HAS" of "HASTE" 198 remain locked based upon the deletion of "D" and the immediately subsequent input at 184.

The claimed concept thus advantageously provides to the user increased control over the error correction routine by selectively disabling the error correction routine for only a single input immediately following a deletion input. That is, the error correction routine is automatically suspended for a single input immediately after a deletion input and is automatically reactivated for inputs subsequent thereto.

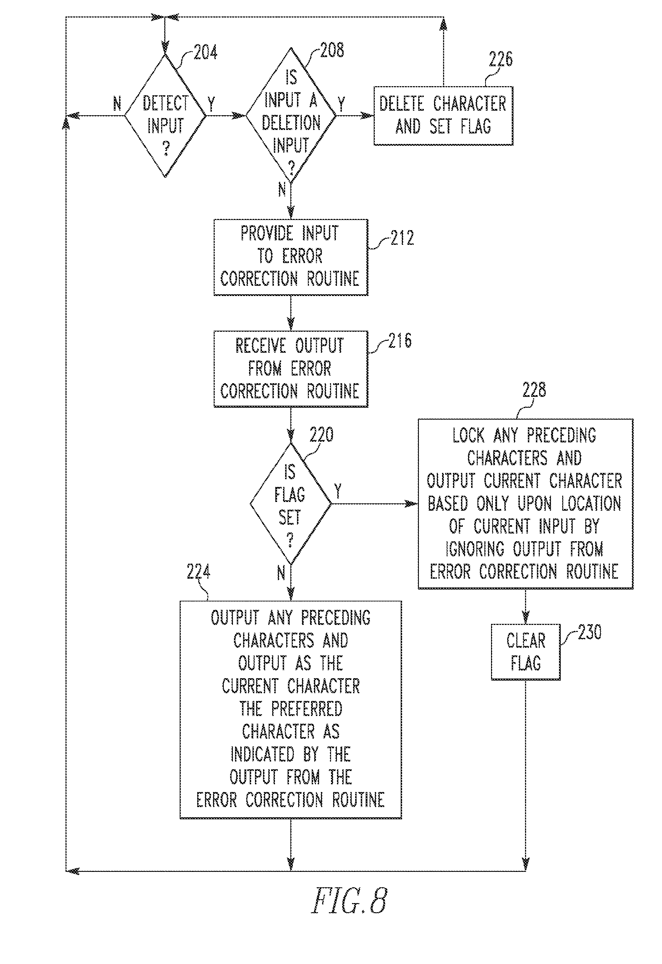

Aspects of an improved method in accordance with the disclosure are depicted generally in Fig. 8. An input is detected, as at 204, and it is then determined, as at 208, whether the current input is a deletion input. If it is determined at 208 that the current input is a deletion input, such as would be detected from an actuation of the <BACKSPACE> 158, processing continues at 226 where the most recently output character is deleted and a flag is set. Processing thereafter continues, as at 204, where further input can be detected.

However, if it is determined at 208 that the current input is not a deletion input, the input is provided, as at 212, to the error correction routine which analyzes the precise location of the input in conjunction with the linguistic database and provides, as at 216, an output that is received by the text input routine.

It is then determined, as at 220, whether the flag is set. If the flag is not set, processing continues to 224 where the text input routine outputs as the current letter the preferred character that is indicated by the output from the error correction routine, i.e., based at least in part upon a preferred word or prefix that was identified in the linguistic database. The error correction routine will additionally output any letters of the preferred word or prefix that precede the current letter and that were the subject of earlier inputs. It is reiterated that any such preceding character may change based upon the preferred word or prefix identified by the error correction routine if the preceding character has not been locked by a deletion input followed immediately by an actuation of an alphanumeric input element 156. It is also reiterated that the preferred character as determined by the error correction routine may be the actual character 164 assigned to the alphanumeric input element 156 that was the location of the current input or may be a different character based upon the algorithms employed by the error correction routine. Processing thereafter continues, as at 204, where further input can be detected.

On the other hand, if it is determined at 220 that the flag has been set, which indicates that the current input is one that has immediately followed a deletion input, processing continues as at 228 where any preceding characters that have been output are locked. Also at 228, the current letter that is output is based only upon the actual location of the current input by ignoring any output from the error correction routine. The flag is then cleared, as at 230, and processing continues, as at 204, where further inputs can be detected. It is understood that by clearing the flag as at 230, the flag will not again be set unless a further input is detected as at 208 as being a deletion input. Thus, in the absence of further deletion inputs, additional inputs at 204 will be processed at 224 which will employ the output of the error correction routine in determining the character that is to be output as the current letter.

It thus can be seen that the improved selective ignoring of the output of the error correction routine enables enhanced control over the error correction routine by the user. This facilitates input, thus making the portable electronic device 100 easier to use.

It is understood that in other embodiments of the instant concept, the error correction routine can be suspended by providing input to the error correction routine only when the flag is not set. That is, in such an alternate embodiment, an input that follows immediately after a deletion input will not be subjected to the error correction routine whereas all other inputs would be subjected to the error correction routine.

It is further noted that the example keyboard 152 is depicted herein as comprising only a single character 164 assigned to each alphanumeric input element 156. It is understood that in alternate embodiments a plurality of alphanumeric characters 164 could be assigned to one or more of the alphanumeric input elements 156 without departing from the present concept. Such a system may employ a multitap input system or a disambiguation routine which would cooperate with the error correction routine to provide output.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method of enabling input on an electronic device that comprises a processor having an error correction routine executable thereon and a touch-sensitive display having an input component that comprises a plurality of input elements, at least some of the input elements each being an alphanumeric input element having at least a first alphanumeric character assigned thereto, the method comprising:
detecting a number of inputs as being a number of initial actuations of a number of the alphanumeric input elements without an intervening deletion input;
subjecting each of at least some of the number of initial actuations to the error correction routine for possible correction;
outputting for each initial actuation of an alphanumeric input element an alphanumeric character that is either an alphanumeric character assigned to the alphanumeric input element or is an alphanumeric character selected based at least in part upon an error-correction output of the error correction routine;
detecting a deletion input followed immediately by an actuation of a particular alphanumeric input element;
suspending the error correction routine as to the actuation of a particular alphanumeric input element; and
outputting for the actuation of a particular alphanumeric input element an alphanumeric character assigned thereto.

2. The method of Claim 1, further comprising:
detecting a number of subsequent actuations of a number of the alphanumeric input elements subsequent to the actuation of a particular alphanumeric input element without an intervening deletion input; and
subjecting each subsequent actuation to the error correction routine.

3. The method of Claim 1 or 2 wherein the suspending of the error correction routine as to the actuation of a particular alphanumeric input element comprises ignoring an error-correction output of the error correction routine as to the actuation of a particular alphanumeric input element.

4. The method of any of Claims 1 to 3 wherein the processor apparatus has access to a linguistic database, and wherein the subjecting of each initial actuation to an error correction routine comprises for each actuation of an alphanumeric input element:
determining that the actuation is ambiguous with respect to the alphanumeric input element and at least one other alphanumeric element;
subjecting the at least first alphanumeric character assigned to the alphanumeric input element and the at least first alphanumeric character assigned to the at least one other alphanumeric element to the linguistic database;
making a determination, based at least in part upon the linguistic database, which of the at least first alphanumeric character assigned to the alphanumeric input element and the at least first alphanumeric character assigned to the at least one other alphanumeric element is a preferred alphanumeric character; and
providing the preferred alphanumeric character as an error-correction output of the error correction routine.

5. A portable electronic device comprising:
a memory having an error correction routine stored therein;
a processor structured to have the error correction routine executed thereon;
a touch-sensitive display having an input component that comprises a plurality of input elements, at least some of the input elements each being an alphanumeric input element having at least a first alphanumeric character assigned thereto;
the memory further having stored therein one or more routines which, when executed on the processor, cause the portable electronic device to perform operations comprising:
detecting a number of inputs as being a number of initial actuations of a number of the alphanumeric input elements without an intervening deletion input;
subjecting each of at least some of the number of initial actuations to the error correction routine for possible correction;
outputting for each initial actuation of an alphanumeric input element an alphanumeric character that is either an alphanumeric character assigned to the alphanumeric input element or is an alphanumeric character selected based at least in part upon an error-correction output of the error correction routine;
detecting a deletion input followed immediately by an actuation of a particular alphanumeric input element;
suspending the error correction routine as to the actuation of a particular alphanumeric input element; and
outputting for the actuation of a particular alphanumeric input element an alphanumeric character assigned thereto.

6. The portable electronic device of Claim 5 wherein the operations further comprise:
detecting a number of subsequent actuations of a number of the alphanumeric input elements subsequent to the actuation of a particular alphanumeric input element without an intervening deletion input; and
subjecting each subsequent actuation to the error correction routine.

7. The portable electronic device of Claim 5 or 6 wherein the suspending of the error correction routine as to the actuation of a particular alphanumeric input element comprises ignoring an error-correction output of the error correction routine as to the actuation of a particular alphanumeric input element.

8. The method of any of Claims 5 to 7 wherein the processor apparatus has access to a linguistic database, and wherein the subjecting of each initial actuation to an error correction routine comprises for each actuation of an alphanumeric input element:
determining that the actuation is ambiguous with respect to the alphanumeric input element and at least one other alphanumeric element;
subjecting the at least first alphanumeric character assigned to the alphanumeric input element and the at least first alphanumeric character assigned to the at least one other alphanumeric element to the linguistic database;
making a determination, based at least in part upon the linguistic database, which of the at least first alphanumeric character assigned to the alphanumeric input element and the at least first alphanumeric character assigned to the at least one other alphanumeric element is a preferred alphanumeric character; and
providing the preferred alphanumeric character as an error-correction output of the error correction routine.

9. A computer-readable medium having computer-readable code executable by at least one processor of a portable electronic device to perform the method of claim 1.

## Amended claims

### Amended claims in accordance with Rule 137(2) EPC.

**1.** A method of enabling input on an electronic device (100) that comprises a processor (102) having an error correction routine executable thereon and a touch-sensitive display (118) having an input component (114) that comprises a plurality of input elements (154), at least some of the input elements each being an alphanumeric input element (156) having at least a first alphanumeric character assigned thereto, the method comprising:
detecting a number of inputs as being a number of initial actuations of a number of the alphanumeric input elements (156) without an intervening deletion input;
subjecting each of at least some of the number of initial actuations to the error correction routine for possible correction;
outputting for each initial actuation of an alphanumeric input element (156) an alphanumeric character that is either an alphanumeric character assigned to the alphanumeric input element (156) or is an alphanumeric character selected based at least in part upon an error-correction output of the error correction routine;
detecting a deletion input followed immediately by an actuation of a particular alphanumeric input element (156);
suspending the error correction routine as to the actuation of a particular alphanumeric input element (156); and
outputting for the actuation of a particular alphanumeric input element (156) an alphanumeric character assigned thereto.

**2.** The method of Claim 1, further comprising:
detecting a number of subsequent actuations of a number of the alphanumeric input elements (156) subsequent to the actuation of a particular alphanumeric input element (156) without an intervening deletion input; and
subjecting each subsequent actuation to the error correction routine.

**3.** The method of Claim 1 or 2 wherein the suspending of the error correction routine as to the actuation of a particular alphanumeric input element (156) comprises ignoring an error-correction output of the error correction routine as to the actuation of a particular alphanumeric input element (156).

**4.** The method of any of Claims 1 to 3 wherein the processor apparatus (102) has access to a linguistic database, and wherein the subjecting of each initial actuation to an error correction routine comprises for each actuation of an alphanumeric input element (156):
determining that the actuation is ambiguous with respect to the alphanumeric input element (156) and at least one other alphanumeric element;
subjecting the at least first alphanumeric character assigned to the alphanumeric input element (156) and the at least first alphanumeric character assigned to the at least one other alphanumeric element to the linguistic database;
making a determination, based at least in part upon the linguistic database, which of the at least first alphanumeric character assigned to the alphanumeric input element (156) and the at least first alphanumeric character assigned to the at least one other alphanumeric element is a preferred alphanumeric character; and
providing the preferred alphanumeric character as an error-correction output of the error correction routine.

**5.** A portable electronic device (100) comprising:
a memory having an error correction routine stored therein;
a processor (102) structured to have the error correction routine executed thereon;
a touch-sensitive display (118) having an input component (114) that comprises a plurality of input elements (154), at least some of the input elements (154) each being an alphanumeric input element (156) having at least a first alphanumeric character assigned thereto;
the memory further having stored therein one or more routines which, when executed on the processor (102), cause the portable electronic device (100) to perform operations comprising:
detecting a number of inputs as being a number of initial actuations of a number of the alphanumeric input elements (156) without an intervening deletion input;
subjecting each of at least some of the number of initial actuations to the error correction routine for possible correction;
outputting for each initial actuation of an alphanumeric input element (156) an alphanumeric character that is either an alphanumeric character assigned to the alphanumeric input element (156) or is an alphanumeric character selected based at least in part upon an error-correction output of the error correction routine;
detecting a deletion input followed immediately by an actuation of a particular alphanumeric input element (156);
suspending the error correction routine as to the actuation of a particular alphanumeric input element (156); and
outputting for the actuation of a particular alphanumeric input element (156) an alphanumeric character assigned thereto.

**6.** The portable electronic device (100) of Claim 5 wherein the operations further comprise:
detecting a number of subsequent actuations of a number of the alphanumeric input elements (156) subsequent to the actuation of a particular alphanumeric input element (156) without an intervening deletion input; and
subjecting each subsequent actuation to the error correction routine.

**7.** The portable electronic device (100) of Claim 5 or 6 wherein the suspending of the error correction routine as to the actuation of a particular alphanumeric input element (156) comprises ignoring an error-correction output of the error correction routine as to the actuation of a particular alphanumeric input element (156).

**8.** The portable electronic device (100) of any of Claims 5 to 7 wherein the processor apparatus (102) has access to a linguistic database, and wherein the subjecting of each initial actuation to an error correction routine comprises for each actuation of an alphanumeric input element:
determining that the actuation is ambiguous with respect to the alphanumeric input element (156) and at least one other alphanumeric element;
subjecting the at least first alphanumeric character assigned to the alphanumeric input element (156) and the at least first alphanumeric character assigned to the at least one other alphanumeric element to the linguistic database;
making a determination, based at least in part upon the linguistic database, which of the at least first alphanumeric character assigned to the alphanumeric input element (156) and the at least first alphanumeric character assigned to the at least one other alphanumeric element is a preferred alphanumeric character; and
providing the preferred alphanumeric character as an error-correction output of the error correction routine.

**9.** A computer-readable medium having computer-readable code executable by at least one processor (102) of a portable electronic device (100) to perform the method of claim 1.
